# EUROPÄISCHE PATENTSCHRIFT

(11) **EP 1 437 196 B1**
(45) Veröffentlichungstag und Bekanntmachung des Hinweises auf die Patenterteilung: **12.10.2005**
(21) Anmeldenummer: 04000113.3
(22) Anmeldetag: 07.01.2004
(51) Int. Cl.: B23Q 1/48

(54) **Vorrichtung zum mehrseitigen Bearbeiten von Hohlprofilen**
Device for working upon an hollow profil along a plurality of his sides
Dispositif pour l'usinage des profilés creux le long plusieurs faces

(30) Priorität: 09.01.2003 DE 10300309
(43) Veröffentlichungstag der Anmeldung: 14.07.2004
(73) Patentinhaber: ROTOX GmbH B. EISENBACH, 56858 Grenderich (DE)
(72) Erfinder: Eisenbach, Bernd, Dipl.-Ing., 65611 Brechen (DE)
(74) Vertreter: Müller, Eckhard

(56) Entgegenhaltungen:
- EP-A- 0 558 982
- US-A- 3 918 145
- US-A- 4 420 911
- PATENT ABSTRACTS OF JAPAN vol. 012, no. 466 (M-772), 7. Dezember 1988 (1988-12-07) & JP 63 191555 A (TOYODA MACH WORKS LTD), 9. August 1988 (1988-08-09)

## Beschreibung

Die Erfindung betrifft eine Vorrichtung zum mehrseitigen Bearbeiten von Hohlprofilen mittels einer an einem Maschinengestell verfahrbaren Bearbeitungseinheit und mit einer im Maschinengestell gelagerten Aufspanneinrichtung für das zu bearbeitende Hohlprofil, wobei die Aufspanneinrichtung im Maschinengestell um eine parallel zur Längsachse des Hohlprofils verlaufende Schwenkachse um mindestens 180° schwenkbar gelagert ist, wie z.B. aus der US-A-3 918 145 bekannt.

Die Herstellung von Bohrungen oder profilierten Durchbrüchen an Hohlprofilen, zum Beispiel zur Aufnahme von Schlössern und Beschlägen für Fenster- und Türrahmen, erfolgt üblicherweise entweder durch spanende Bearbeitung, nämlich Bohren und Fräsen, oder durch Plasmaschneiden.

Eine solche Vorrichtung ist auch aus der EP 558 982 A2 bekannt und bildet den Gegenstand des Oberbegriffs des Anspruchs 1. Nachteilig bei der bekannten Vorrichtung ist, dass das Profil zur Bearbeitung an Positionen, die außerhalb des Verfahrbarkeitsbereichs des Bearbeitungswerkzeugs liegen, neu eingespannt werden muss. Beispielsweise muss ein Stabprofil, in welches in seiner Mitte eine Schlosskastenausnehmung eingefräst und dessen Enden bearbeitet werden soll, zweimal eingespannt werden. Dabei wird beispielsweise das Profil zunächst so eingespannt, dass sein Mittelbereich im Verfahrbarkeitsbereich des Bearbeitungswerkzeugs liegt. Danach ist es jeweils neu einzuspannen, um die Bearbeitung an den Enden des Profils durchzuführen. Dieses Umrüsten erhöht die Bearbeitungszeiten und die Bearbeitungstoleranzen.

Aufgabe der Erfindung ist es, eine solche Vorrichtung dahingehend weiter auszubilden, dass die Bearbeitung langer Hohlprofile schneller bewerkstelligt werden kann.

Diese Aufgabe wird erfindungsgemäß durch die Merkmale des Anspruchs 1 gelöst. Hierdurch wird eine Bearbeitung unterschiedlicher Positionen des Werkstückes ohne Neueinspannung ermöglicht, wobei die hohe Präzision der bisherigen Anlagen noch erhöht wird. Musste bisher ein Hohlprofil, das in seiner Mitte und an den Enden bearbeitet werden sollte, zwei oder dreimal eingespannt werden, so reicht nun ein einziges Einspannen aus. Durch das erfindungsgemäße Längsverschieben des eingespannten Hohlprofils an die gewünschten Stellen können mit dem Bearbeitungswerkzeug die jeweiligen Durchbrüche oder Bohrungen ohne Umspannen des Hohlprofils an allen Bearbeitungspositionen eingebracht werden. Dies führt zu einem deutlichen Zeitgewinn bei der Bearbeitung und damit zu höherer Produktivität. Insbesondere entfallen die Fertigungstoleranzen durch das Umspannen.

Die Längsverschiebung des eingespannten Hohlprofils in der Aufspanneinrichtung kann auf unterschiedliche Weisen geschehen. So kann die gesamte das Hohlprofil tragende Aufspanneinrichtung verschiebbar ausgebildet sein, zum Beispiel in Rollenlagerungen.

Nach einer vorteilhaften Ausgestaltung der Erfindung ist eine Zweiteilung der Aufspanneinrichtung vorgesehen, nämlich in eine Grundplatte, die nur schwenkbar ist, und einen darauf verschiebbar angeordneten Aufnahmetisch, auf den das Hohlprofil aufgespannt wird. Dieser Aufnahmetisch ist auf der Grundplatte in Längsrichtung verfahrbar und verfährt zum Beispiel wie ein Schlitten eindimensional in einer Führungseinrichtung der Grundplatte, wodurch die Bearbeitungspräzision der bisherigen Vorrichtungen noch erhöht und gleichzeitig ein noch größerer Bearbeitungsbereich erreicht wird.

Bevorzugt ist der Aufnahmetisch so an der Grundplatte geführt, dass er auch bei unterschiedlichen Schwenkstellungen formschlüssig mit der Grundplatte verbunden ist. Dies wird zum Beispiel durch den Einsatz von Linearführungssystemen, bestehend aus Linearführungsschienen und Linearführungswagen mit Kugelumlauf erreicht, auch wenn eine Verschwenkung um 90° oder gar um 180° erfolgt. Die Linearführungswagen mit Kugelumlauf sind auf der Grundplatte befestigt, die Linearführungsschienen sind am Aufnahmetisch befestigt.

Die Halterung der verschwenkbaren Aufspanneinrichtung im Maschinengestell kann auf beliebige bekannte Weise erfolgen. In einer bevorzugten Ausführung der Erfindung sind zum Realisieren der Schwenkbewegung der Aufspanneinrichtung im Maschinengestell C-förmige Schienen vorgesehen, bevorzugt an Wangen des Maschinengestells. Solche C-förmigen Schienen haben sich bereits im beschriebenen Stand der Technik bewährt. Sie bieten einen sehr sicheren Halt für die Aufspanneinrichtung oder die Grundplatte. Ihre Anordnung an den Außenseiten des Maschinengestells ergibt eine breite Basis, welche die Grundplatte auch bei weit ausgefahrenem Aufnahmetisch sicher und präzise in der gewünschten Position hält.

Die Führung des Aufnahmetisches in der Grundplatte kann in an sich bekannter Weise als Gleit- oder als Rollführung ausgebildet sein. Prisma- oder Schwalbenschwanzführungen oder ähnliche Linearführungen ergeben ein sehr exaktes, reproduzierbares Verschieben.

Das Verschieben oder Verfahren des Aufnahmetisches kann frei über den ganzen Bereich erfolgen. Es können aber auch Stoppstellen" oder Rastungen vorgesehen sein, an denen die Verschiebebewegung gestoppt und fixiert wird. Nach einer Ausführung der Erfindung sind dazu ausfahrbare Anschlagelemente vorgesehen, die in den Verfahrweg des Aufnahmetisches eingreifen und die Verfahrbewegung an exakt vorgegebenen Stellen stoppen, so dass vorbestimmte Positionen präzise und reproduzierbar anfahrbar sind. Diese Anschläge können pneumatisch, elektrisch oder hydraulisch betätigbar sein und werden bevorzugt dadurch gebildet, dass Anschlagelemente in den Verfahrweg eingefahren werden und gegen entsprechende Anschlagelemente an dem Verschiebetisch anschlagen auf dem Gegenelement einrasten. Mit solchen Elementen können vorgegebene Positionen außerordentlich präzise, reproduzierbar und hochgenau angefahren werden.

Das Verschieben oder Verfahren des Aufnahmetisches kann manuell erfolgen. Dabei verschiebt der Benutzer den Aufnahmetisch mittels eines Griffes oder Hebels an die gewünschte Position, wo er von sich aus stoppt, zum Beispiel durch ein Anschlagen. Die Verfahrbewegung kann aber auch pneumatisch, elektrisch oder hydraulisch erfolgen. Diese Varianten ersparen dem Benutzer einen Krafteinsatz und erlauben zudem ein automatisches Ansteuern von vorgegebenen Positionen, wenn entsprechende Rastungen oder ein entsprechendes Steuerprogramm vorgesehen sind.

Nach einer bevorzugten Ausführung der Erfindung ist noch zusätzlich eine weitere Verfahrbarkeit des Hohlprofils vorgesehen, nämlich senkrecht zur Längsachse des Hohlprofils. Die Verfahrbarkeit erfolgt damit zusätzlich auch in Querrichtung des Aufnahmetisches, so dass das Hohlprofil ohne Ausspannen nicht nur längs, sondern auch quer, also insgesamt in einer Ebene, verschiebbar ist. Diese zweite Verschiebung kann ebenfalls wieder manuell oder maschinell erfolgen. Auch hier können Anschläge vorgesehen sein, um auch beim manuellen Verschieben vorgegebene Positionen exakt anfahren zu können.

Nach einer weiteren Ausführung der Erfindung sind auf dem Aufnahmetisch Rollen vorgesehen, bevorzugt so angeordnet, dass ihre Drehachsen quer zur Längsrichtung des Aufnahmetisches verlaufen. Dies erlaubt ein gleitreibungsfreies, besonders leichtes und schnelles Verschieben des Hohlprofils auf dem Aufnahmetisch in Längsrichtung. Vor dem Einspannen kann dadurch das Hohlprofil relativ schnell und ohne große Kraftanstrengung in eine gewünschte Lage gebracht werden, in der es dann von den Spannelementen festgehalten wird.

Weitere Ziele, Vorteile, Merkmale und Anwendungsmöglichkeiten der vorliegenden Erfindung ergeben sich anhand des in den Zeichnungen dargestellten Ausführungsbeispieles.

Es zeigen:
- Fig. 1: eine mögliche Ausführungsform einer erfindungsgemäßen Vorrichtung,
- Fig. 2: eine Seitenansicht der Vorrichtung der Figur 1,
- Fig. 3: eine Detailansicht aus Fig. 2,
- Fig. 4 und 5: zwei Ausführungen von erfindungsgemäßen Schlitten,
- Fig. 6: die Vorrichtung gemäß Figur 1 in einer verschwenkten Bearbeitungsstellung an einem Hohlprofilende,
- Fig. 7: eine Seitenansicht der Vorrichtung gemäß Fig. 6 und
- Fig. 8: eine Detailansicht aus Fig. 7.

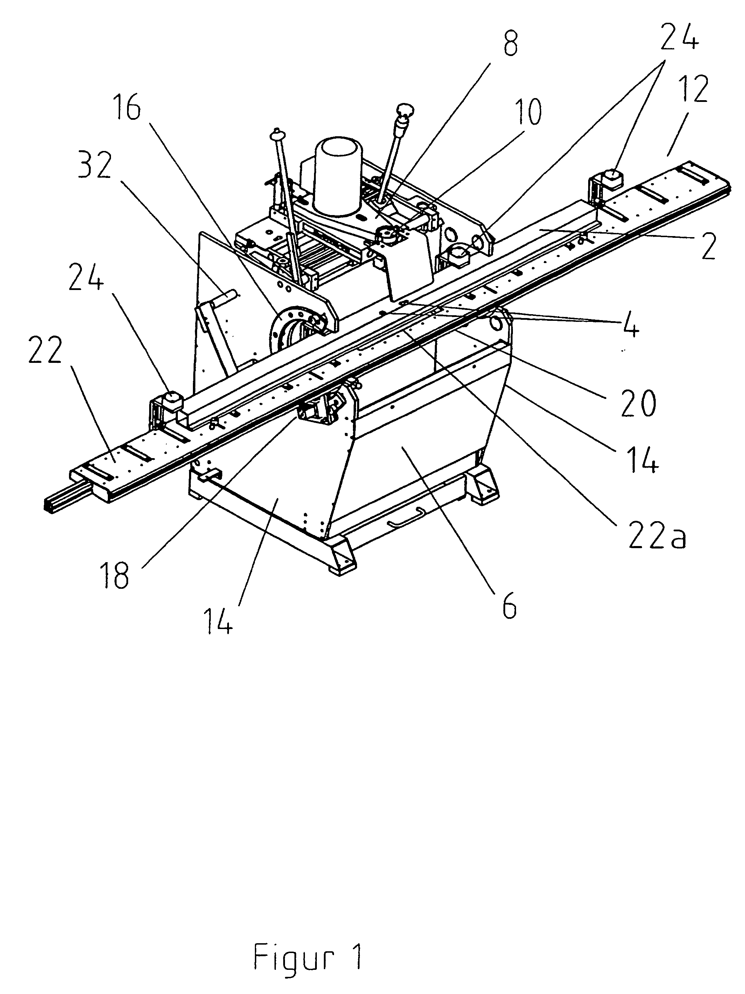

Fig. 1 zeigt eine Ausführung einer erfindungsgemäßen Vorrichtung zum Bearbeiten eines Hohlprofils 2, beispielsweise ein Längsteil eines Türrahmens. Dabei sollen in drei oder vier Seitenflächen des Hohlprofils 2, das beispielsweise aus Kunststoff oder Aluminium besteht, Durchbrüche 4 gefräst werden. Hierzu ist als Bearbeitungseinheit 10 ein Fräskopf mit senkrecht stehender Fräserachse vorgesehen. Die Bearbeitungseinheit 10 ist auf einem Schlitten 8 angeordnet und kann in drei Richtungen, in der Fig. 1 nach links und rechts, nach vorne und nach hinten sowie nach oben und unten bewegt werden, um jede beliebige Position in ihrem Verfahrbereich an der Oberseite des Hohlprofils 2 zu erreichen. Die Längen- und Breitenverstellung des Schlittens 8 erfolgt z.B. durch eine (nicht dargestellte) CNC-Steuerung, die mehrere Motoren antreibt, oder wird mit Hebeln von Hand verschoben, wie in Figur 1 dargestellt.

Das Hohlprofil 2 wird von einer Aufspanneinrichtung 12 am Maschinengestell 6 gehalten. Das Maschinengestell 6 weist in Abstand zueinander zwei miteinander starr verbundene Wangen 14 auf, denen bei dem hier gewählten Ausführungsbeispiel jeweils eine C-förmige Schiene 16 so zugeordnet ist, dass die offene Seite des C nach vorne außen weist. Auf diesen beiden C-förmigen Schienen 16 verfährt je ein Schlitten 18. Beide Schlitten 18 tragen eine Grundplatte 20, auf der ein Aufnahmetisch 22 für das Hohlprofil 2 angeordnet ist.

Zum Festklemmen des Hohlprofils 2 am Aufnahmetisch 22 sind Spannelemente 24 vorgesehen, von denen in Fig. 1 die beiden äußeren geöffnet und die beiden inneren gespannt sind. Sie klemmen das Hohlprofil 2 auf dem Aufnahmetisch 22 fest.

Für den Aufnahmetisch 22 gibt es zwei Verstellmöglichkeiten Zum einen kann der Aufnahmetisch 22 zusammen mit der Grundplatte 20 um seine Längsachse verschwenkt werden. Daneben kann der Aufnahmetisch 22 in seiner Längsrichtung linear auf der Grundplatte 20 verfahren werden. Zum Verschwenken ist es vorgesehen, dass die Schlitten 18 durch Heranziehen des Hebels 32 auf den C-förmigen Schienen 16 verfahren werden und dadurch ein Verschwenken der Aufspanneinrichtung 12 erfolgt. Durch das Verkippen oder Verschwenken um beliebige Winkel, vorzugsweise 90°, jeweils 90° werden jeweils andere Seiten des Hohlprofils 2 unter die Bearbeitungseinheit 10 geschwenkt und sind der Bearbeitung frei zugänglich. So kann jeweils eine andere Seite des Hohlprofils 2 gefräst, gebohrt oder geschnitten werden. Zur Bearbeitung der vierten Seite des Hohlprofils 2, die auf dem Aufnahmetisch 22 aufliegt, ist im Mittelbereich des Aufnahmetisches 22 eine viereckige Durchbrechung 22a vorgesehen, durch die der Fräser der Bearbeitungseinheit 10 auf das Hohlprofil 2 hindurchgreifen kann, wenn die Aufspanneinrichtung 12 um 180° gegen die in Fig. 1 gezeigte Stellung verschwenkt ist. Da solche Schlossprofile in der Regel nur in der Mitte des Fenster- oder des Türrahmens angeordnet sind, reicht es, wenn sich die Durchbrechung 22a auch nur in der Mitte des Aufnahmetisches 22 befindet. Selbstverständlich ist auch in der Grundplatte 20 eine entsprechende Durchbrechung vorgesehen.

Erfindungsgemäß ist der Aufnahmetisch 22 auf der Grundplatte 20 in Längsrichtung des Hohlprofils 2 verfahrbar gelagert, so dass das aufgespannte Profil 2 entweder, wie in Figur 1 gezeigt, mit seinem mittleren Bereich in der Nähe der Bearbeitungseinheit 10 liegt oder aber nach einem Verfahren nach links oder nach rechts die Endbereiche des Hohlprofils 2 unter die Bearbeitungseinheit 10 gebracht werden können.

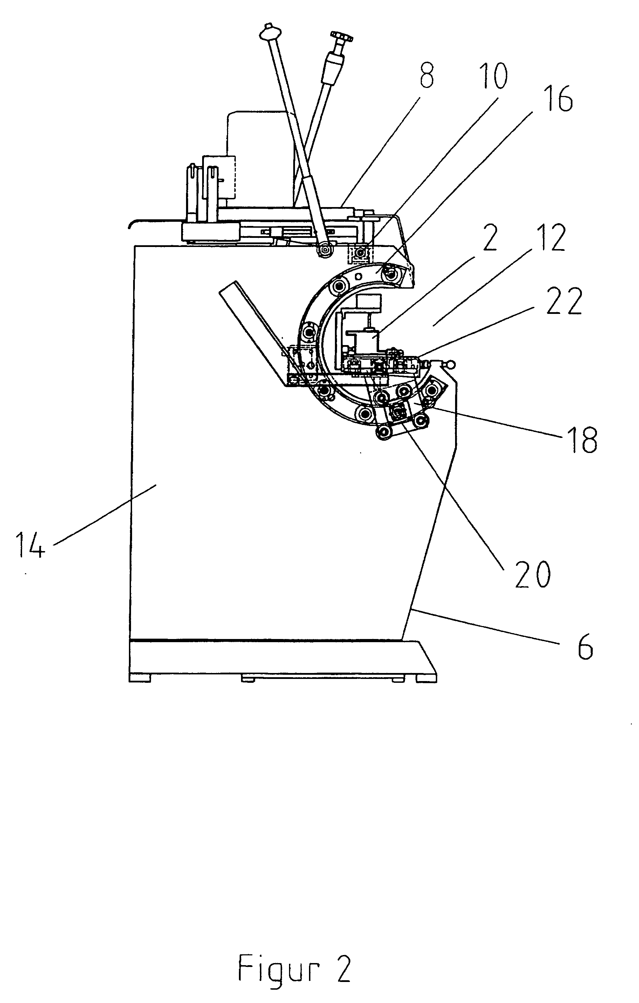

Fig. 2 zeigt eine Seitenansicht (Blickrichtung auf die Wange 14) der Vorrichtung gemäß Fig. 1. Auf der Oberseite des Maschinengestells 6 ist der Schlitten 8 mit der Bearbeitungseinheit 10 in zwei Ebenen horizontal und vertikal verfahrbar angeordnet. Somit ist das eigentliche Bearbeitungswerkzeug, der Bohrer, der Fräser oder der Plasmaschneider, im Maschinengestell 6 in das Hohlprofil 2 absenkbar gelagert. Auf der rechten Seite der Wange 14 ist das Hohlprofil 2 auf dem Aufnahmetisch 22 befestigt, der seinerseits über die Grundplatte 20 an zwei Schlitten 18 gehalten ist, die auf den beiden C-förmigen Schienen 16 um ca. 180° verfahrbar sind. Über diese Verfahrbarkeit kann das Hohlprofil 2 bei dieser Ausführungsform um 180° verschwenkt werden, so dass drei (bei einem Schwenkbereich von 270° vier) Seiten des Hohlprofils dem Fräser oder der Plasmaschneideinrichtung zugewandt werden können.

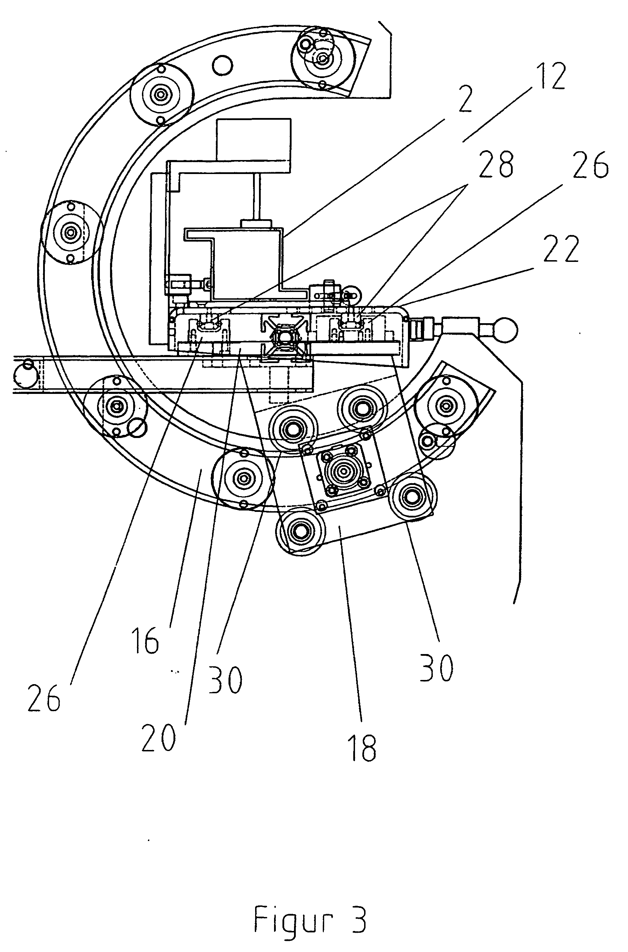

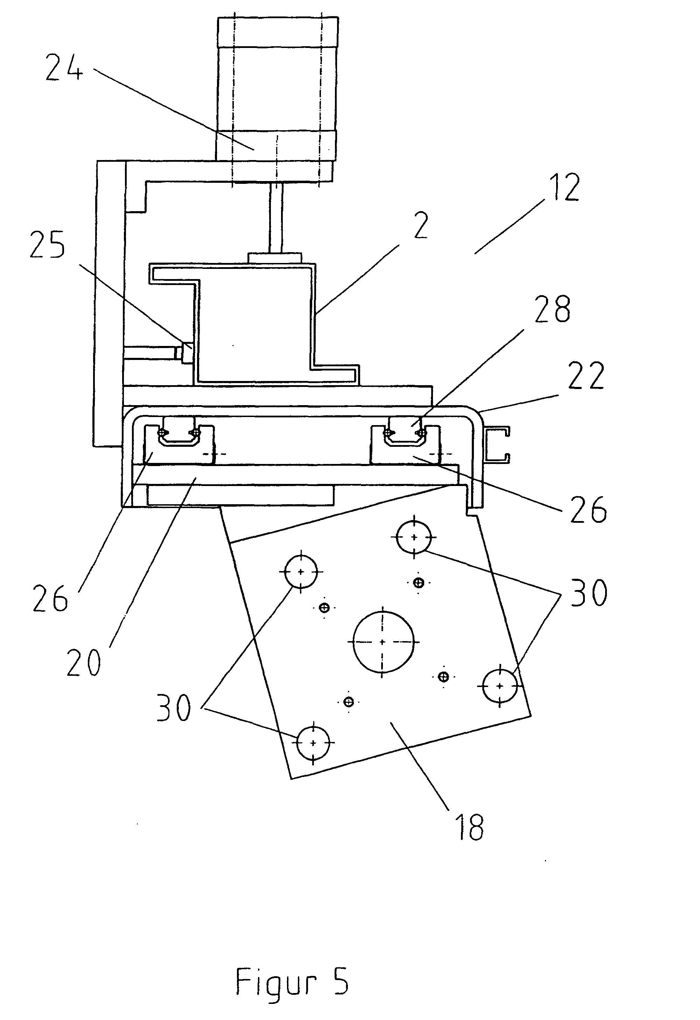

Figur 3 zeigt vergrößert einen Ausschnitt aus Figur 2, wobei hier gut zu erkennen ist, dass einer der beiden Schlitten 18 mit seinen Rollen 30 die ihm zugeordnete C-förmige Schiene 16 umgreift und auf ihr verfahrbar ist. An seiner Oberseite trägt der Schlitten 18 die Grundplatte 20, die zwei in die Papierebene hineinlaufende Linearführungswagen 26 aufweist, wie dies auch aus Figur 5 zu erkennen ist. Mit diesem Linearführungswagen 26 ist der Aufnahmetisch 22 mit dem Hohlprofil 2 auf der Grundplatte 20 verfahrbar. Dazu besitzt der Aufnahmetisch 22 an seiner Unterseite Linearführungsschienen 28, die eine Längsverschiebung des Aufnahmetisches 22 gegenüber der Grundplatte 20 erlauben.

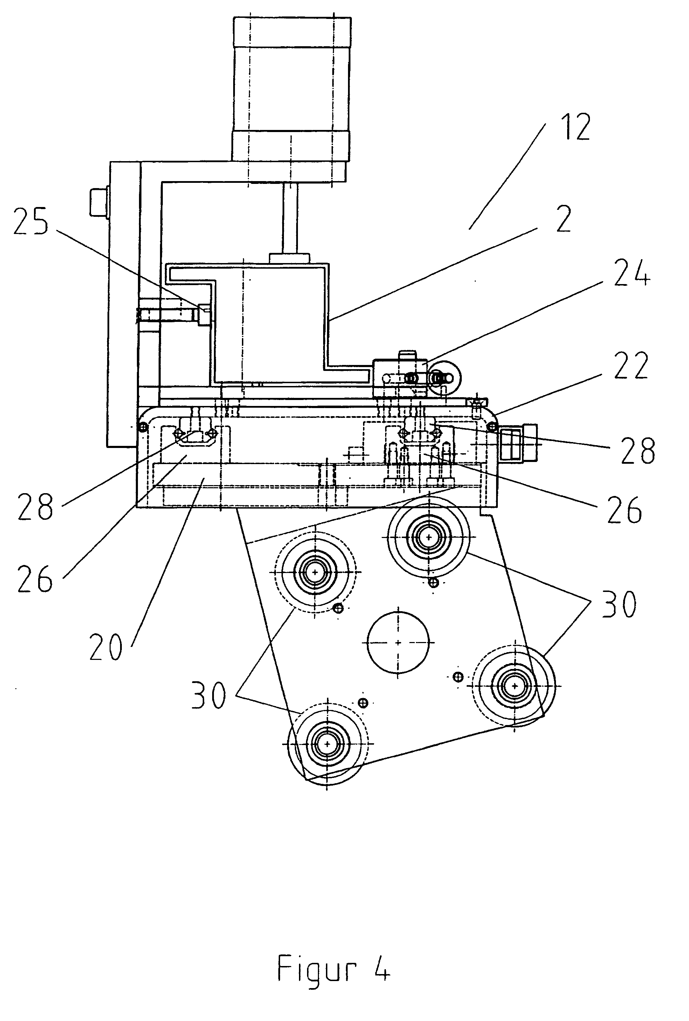

Anhand der Figuren 4 und 5 ist einer der Schlitten 18 nochmals etwas vergrößert gezeigt. An seinem unteren Ende besitzt er die vier Rollen 30, mit denen er auf der Schiene 16 verfahrbar ist. An seinem oberen Ende trägt er die Grundplatte 20, auf der die Linearführungswagen 26, bei dem hier gewählten Ausführungsbeispiel vier Linearführungswagen, befestigt sind, in denen die Linearführungsschienen 28 des Aufnahmetisches 22 verfahrbar gelagert sind. Gezeigt ist ein weiteres am Aufnahmetisch 22 angeordnetes Spannelement 24, welches das Hohlprofil 2 gegen ein Anschlagelement 25 (nur in Fig. 4 gezeigt) nach links drückt und so eine sichere, definierte Festlegung des Hohlprofils 2 am Aufnahmetisch 22 und damit an der Aufspanneinrichtung 12 ergibt.

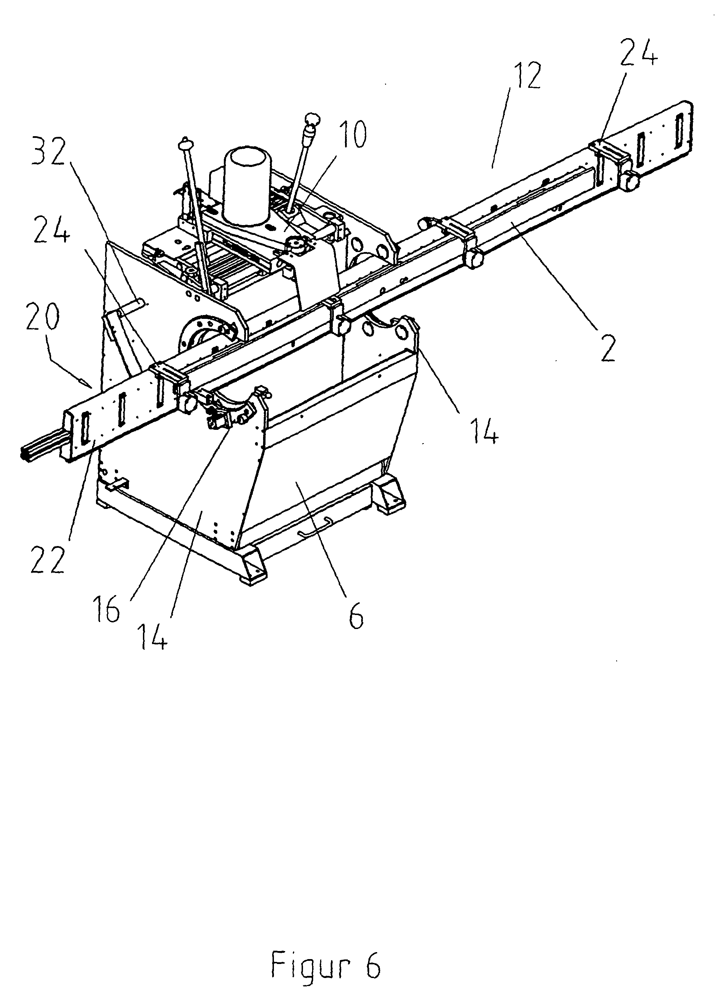

In Fig. 6 ist die Vorrichtung der Figur 1 gezeigt, wobei die Aufspanneinrichtung 12 mit dem eingespannten Hohlprofil 2 um 90° verkippt wurde und der Aufnahmetisch 22 mit dem Hohlprofil 2 nach rechts, zur Bearbeitung des linken Hohlprofilendes, verschoben ist. Dies erfolgt durch Verfahren der Schlitten 18 auf den C-förmige Schienen 16 an den Wangen 14. Die Aufspanneinrichtung 12 und der Aufnahmetisch 22 stehen nun nicht waagrecht, sondern senkrecht, so dass nun eine andere Seite des Hohlprofils 2 nach oben gerichtet und von der Bearbeitungseinheit 10 bearbeitbar ist. Die Schwenkbewegung erfolgte mittels des Hebels 32, der in der Nähe einer der C-förmigen Schienen 16 angeordnet ist. Bevorzugt sind Rastungen vorgesehen, die ein schnelles Verschwenken der Aufspanneinrichtung 12 um zum Beispiel 90° und ein nachfolgendes Einrasten erlauben.

Soll auch die Unterseite des Hohlprofils bearbeitet werden, so muss die Aufspanneinrichtung 12 nochmals um zum Beispiel 90° weiter verdreht werden. Die Fräsköpfe oder der Plasmaschneider der Bearbeitungseinheit 10 greifen dann durch die anhand der Figur 1 beschriebene Durchbrechung 22a des Aufnahmetisches 22 hindurch und können so die Unterseite des Profils 2 erreichen und bearbeiten.

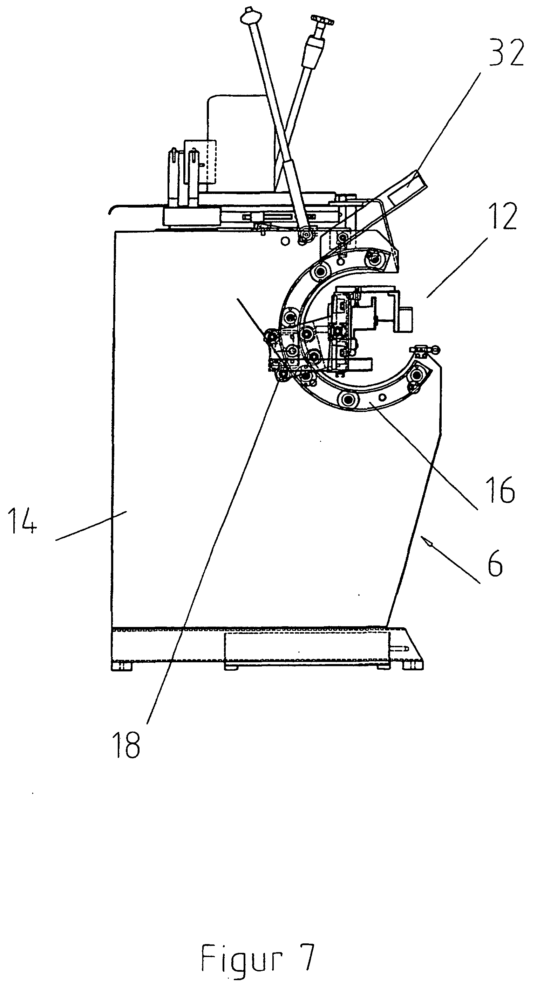

Fig. 7 zeigt eine Seitenansicht der Figur 6 mit Blick auf die Wange 14 des Maschinengestells 6. Die beiden Schlitten 18 sind auf der C-förmigen Schiene 16 nach links verfahren, so dass die Aufspanneinrichtung 12 und das Hohlprofil 2 um 90° verschwenkt sind. Der Hebel 32 steht nun schräg nach vorne oben.

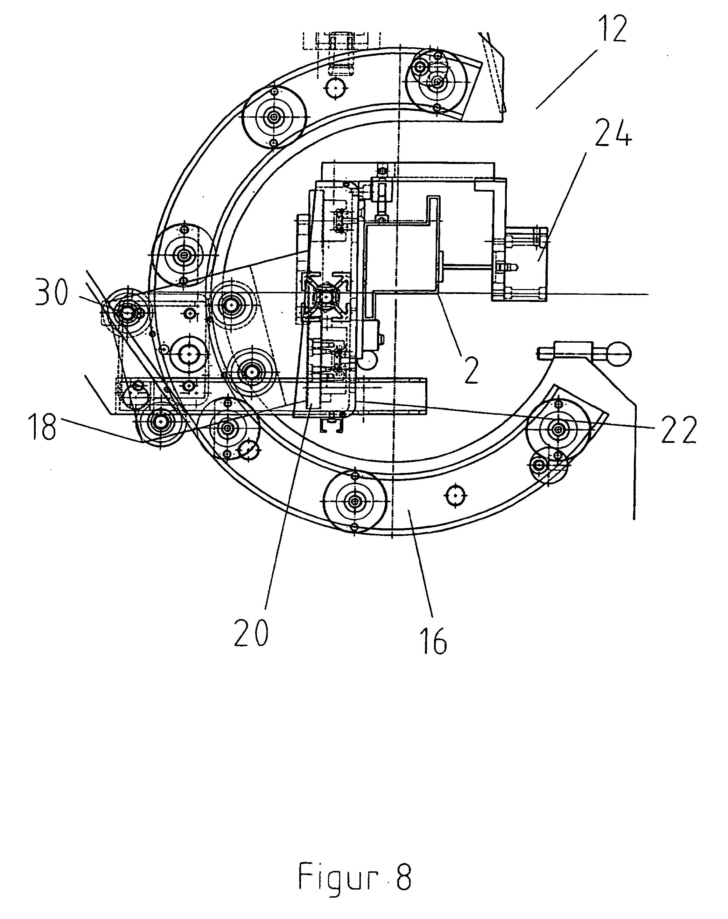

Fig. 8 zeigt vergrößert einen Ausschnitt aus der Fig. 7. Der Schlitten 18 mit dem eingespannten Hohlprofil 2, welches mittels Spannelement 24 auf dem Aufnahmetisch 22 an der Grundplatte 22 gehalten ist, ist gegenüber den Fig. 1 bis 3 um 90° verschwenkt. Die Rollen 30 des Schlittens 18 befinden sich nun ungefähr in der Mitte der C-förmigen Schiene 16. Zu erkennen ist, dass in dieser Ausführungsform ein Verschwenkwinkel von über 180° realisierbar ist, so dass drei der vier Seiten des Hohlprofils 2 ohne Umspannen nach oben schwenkbar und damit bearbeitbar sind.

### Bezugszeichenliste

- 2: Hohlprofil
- 4: Durchbrüche
- 6: Maschinengestell
- 8: Schlitten
- 10: Bearbeitungseinheit
- 12: Aufspanneinrichtung
- 14: Wange
- 16: C-förmige Schiene
- 18: Schlitten
- 20: Grundplatte
- 22: Aufnahmetisch
- 22a: Durchbrechung
- 24: Spannelement
- 25: Anschlagelement
- 26: Linearführungswagen
- 28: Linearführungsschiene
- 30: Rolle
- 32: Hebel

## Patentansprüche

1. Hohlprofilbearbeitungsvorrichtung zum mehrseitigen Bearbeiten von Hohlprofilen (2) mittels einer an einem Maschinengestell (6) verfahrbaren Bearbeitungseinheit (10) und mit einer im Maschinengestell (6) gelagerten Aufspanneinrichtung (12) für das zu bearbeitende Hohlprofil (2), wobei die Aufspanneinrichtung (12) im Maschinengestell (6) um eine parallel zur Längsachse des Hohlprofils (2) verlaufende Schwenkachse um mindestens 180° schwenkbar gelagert ist, **dadurch gekennzeichnet, dass** das zu bearbeitende Hohlprofil (2) auf einem in Längsrichtung verfahren Aufnahmetisch (22) aufgespannt ist, wobei Anschlagelemente vorgesehen sind, die mit Gegenanschlagelementen am Aufnahmetisch (22) zusammenwirken, um vorgegebene Positionen des Aufnahmetisches (22) präzise und reproduzierbar anzufahren.

2. Vorrichtung nach Anspruch 1, **dadurch gekennzeichnet, dass** der Aufnahmetisch (22) auf einer verschwenkbaren Grundplatte (20) verfahrbar ist.

3. Vorrichtung nach Anspruch 1 oder 2, **dadurch gekennzeichnet dass** der Aufnahmetisch (22) an der Grundplatte (20) geführt und in unterschiedlichen Schwenkstellungen an der Grundplatte (20) formschlüssig gehalten ist.

4. Vorrichtung nach einem der vorhergehenden Ansprüche, **dadurch gekennzeichnet, dass** im Maschinengestell (6) C-förmige Schienen (16), bevorzugt an Wangen (14), angeordnet sind.

5. Vorrichtung nach einem der Ansprüche 1 bis 4, **gekennzeichnet durch** Linearführungswagen (26) am Aufnahmetisch (22) und Linearführungsschienen (28) an einer Grundplatte(20).

6. Vorrichtung nach einem der vorhergehenden Ansprüche, **dadurch gekennzeichnet, dass** die Anschlagelemente in den Verfahrweg des Aufnahmetisches (22) ausfahrbar sind, um die Längsbewegung des Aufnahmetisches (22) in vorbestimmten Positionen zu stoppen.

## Claims

1. Hollow profile member processing device for multi-sided processing of hollow profile members (2) by means of a processing unit (10) movable at a machine frame (6) and with a clamping device (12), which is mounted in the machine frame (6), for the hollow profile member (2) to be processed, wherein the clamping device (12) is mounted in the machine frame (6) to be pivotable through at least 180° about a pivot axis extending parallel to the longitudinal axis of the hollow profile member (2), **characterised in that** the hollow profile member (2) to be processed is clamped on a mounting table (22) movable in longitudinal direction, wherein abutment elements are provided which co-operate with counter-abutment elements at the mounting table (22) in order to precisely and reproducibly move to predetermined positions of the mounting table (22).

2. Device according to claim 1, **characterised in that** the mounting table (22) is movable on a pivotable base plate (20).

3. Device according to claim 1 or 2, **characterised in that** the mounting table (22) is guided at the base plate (22) and is mechanically positively held at the base plate (20) in different pivot positions.

4. Device according to one of the preceding claims, **characterised in that** C-shaped rails (16) are arranged in the machine frame (6), preferably at cheeks (14).

5. Device according to one of claims 1 to 4, **characterised by** linear guide carriages (26) at the mounting table (22) and linear guide rails (28) at a base plate (20).

6. Device according to one of the preceding claims, **characterised in that** the abutment elements can be moved out into the travel path of the mounting table (22) in order to stop the longitudinal movement of the mounting table (22) at predetermined positions.

## Revendications

1. Dispositif d'usinage de profilés creux pour l'usinage de profilés creux (2) sur plusieurs faces, au moyen d'une unité d'usinage (10) mobile sur un bâti de machine (6) et comportant un dispositif de serrage (12), monté dans le bâti (6) de la machine et prévu pour le profilé creux (2) à usiner, le dispositif de serrage (12) étant monté dans le bâti (6) de la machine de manière pivotante sur au moins 180° autour d'un axe de pivotement parallèle à l'axe longitudinal du profilé creux (2), **caractérisé en ce que** le profilé creux (2) à usiner est bloqué sur une table de réception (22) mobile dans le sens longitudinal, des éléments de butée étant prévus et coopérant avec des éléments de contre-butée sur la table de réception (22), afin de pouvoir amener la table de réception (22) de manière précise et reproductible dans des positions prédéfinies.

2. Dispositif selon la revendication 1, **caractérisé en ce que** la table de réception (22) est mobile sur un plateau de base (20) pivotant.

3. Dispositif selon la revendication 1 ou 2, **caractérisé en ce que** la table de réception (22) est guidée sur le plateau de base (20) et maintenue par conjugaison de forme dans différentes positions de pivotement sur le plateau de base (20).

4. Dispositif selon l'une quelconque des revendications précédentes, **caractérisé en ce que** des rails (16) en forme de C sont agencés dans le bâti (6) de la machine, de préférence sur des joues (14).

5. Dispositif selon l'une quelconque des revendications 1 à 4, **caractérisé par** des chariots de guidage linéaire (26) au niveau de la table de réception (22) et des rails de guidage linéaire (28) au niveau d'un plateau de base (20).

6. Dispositif selon l'une quelconque des revendications précédentes, **caractérisé en ce que** les éléments de butée sont amovibles dans la trajectoire de déplacement de la table de réception (22) afin de pouvoir stopper le mouvement longitudinal de la table de réception (22) dans des positions prédéfinies.
